# EUROPEAN PATENT APPLICATION

(11) **EP 3 178 681 A1**
(43) Date of publication of application: **14.06.2017**
(21) Application number: 16202533.2
(22) Date of filing: 06.12.2016
(51) Int. Cl.: B60G 11/10

(54) **VEHICLE SUSPENSION SYSTEM**

(30) Priority: 09.12.2015 GB 201521707
(71) Applicant: Ifor Williams Trailers Limited, Cynwyd Corwen LL21 0LB (GB)
(72) Inventor: DAVIES, Bryn, WREXHAM, LL14 2DH (GB)
(74) Representative: HGF Limited

(57) **Abstract**

First and second frame hangers (22, 24) are fixedly mounting to a frame member (20) at each side of a vehicle chassis. A for-and aft extending leaf spring (10) has a front end connected to the first frame hanger (22) and a rear end connected to the second frame hanger (24) and at its centre supports the adjacent end of an axle (30). Both the front end and the rear end of the spring (10) are formed into spring eyes (13, 14) and each of the front and rear ends has a pivot axis (at 17) that is offset above a natural axis in bending of the leaf spring and is mounted, typically by the eyes locating on resilient bushes (15, 16) so as to pivot freely about their respective pivot axes when the leaf spring is deflected in use. The leaf spring has an underside of shallow concave shape when unloaded, at rest, and of more substantial concave shape when loaded and when fully deflected. In use there is only minimal change in distance between the pivot axes at the front and rear ends of the spring when the spring is deflected within the range of vertical displacement at the centre of the spring which is required.

## Description

### TECHNICAL FIELD

This invention concerns a suspension system for a vehicle, in which a leaf spring is provided to suspend the main body or chassis of the vehicle from a wheel-bearing axle of the vehicle.

### BACKGROUND

Leaf springs are commonly used in vehicle suspension systems and act to deflect under load changes so as to isolate the main body from vibrations and irregularities occasioned in the course of the vehicle's travel over a surface. The leaf spring, in an unladen or partly laden state, assumes a curved shape, the curvature of which increases or decreases under load changes, with concurrent change in the length between the spring end points.

It is normal practice to provide positive (i.e. fixed) location at one end, usually the front end, of the spring, for example by means of a spring eye and a bush. This arrangement affords a substantially longitudinally fixed disposition for the vehicle's axle in relation to the main body. The other end, usually the rear end, of the spring is mounted in such a way as to accommodate the change in length of the spring and the shape of the spring at various load conditions and is used dynamically to influence the steering and handling of the vehicle.

In a first type of commonly known suspension system the vehicle main body is suspended from a vehicle axle through a leaf spring having, at its front end, in the intended direction of normal travel of the vehicle, a spring eye and bush which afford a substantially longitudinally fixed disposition of the axle relative to the body. At the rear end of the leaf spring a pivotal shackle is used to accommodate changes of length of the spring as its curvature changes under varying load conditions. The rear end of the leaf spring is also formed as a spring eye, mounted onto a bush, but that bush is mounted onto the pivotable shackle. The distance between the respective axes of the bushes at the front and rear ends changes as the spring is flexed under load conditions and the shackle pivots. The spring eyes at both front and rear ends are typically formed above the body of the leaf spring and the leaf spring is typically configured with a downwardly convex curvature in its unladen, at rest condition flexing to a reduced convex curvature or a substantially flat (i.e. substantially horizontal) disposition in its maximally loaded condition.

In another known type of suspension system the arrangement is similar to that just described but the rear spring eye and the pivotable shackle are replaced by a cam slider bracket in which an upper element of non-uniform curvature bears upon an upper surface of the rear end region of the spring leaf in frictional contact therewith. As the spring leaf angle changes, in the locality of the cam slider bracket, the upper surface of the spring leaf bears upon differing zones of the curved element of the bracket, which alters the effective length of the spring leaf. This also changes the spring leaf deflection rate in a non-uniform manner at various loads and the friction between the curved element and the spring leaf has an adverse effect on the quality of the ride experienced on the main body of the vehicle. As the spring slides on the cam slider the friction between the two creates vibrations that may be heard as loud squeaking and clattering.

In this second type of suspension system the leaf spring is again typically configured with a downwardly convex curvature in its unladen, at rest condition flexing to a reduced convex curvature or a substantially flat (i.e. substantially horizontal) disposition in its maximally loaded condition.

The above systems are described and shown schematically as prior art in WO 1999/047373 (EP 0752934) where a proposed improvement is the mounting of the rear end of the leaf spring, which is not formed as a spring eye, to a pivotal shackle.

As already stated, as a suspension leaf spring is deflected during use its length (straight line length, end to end) changes. In certain tandem axle trailers, there is a predetermined, limited spacing between respective axles and, therefore, only a limited fore-aft (longitudinal) distance in which the respective leaf springs for suspension of these axles can be fitted and operate. The front end of the rear spring is, in these cases, mounted closely adjacent the rear end of the front spring, and interference between the two has to be avoided. Use of springs of shorter length is not an option as the required length is constrained by the properties of the leaf spring material. Use of a pivotably mounted (i.e. swingable) shackle to attach the rear end of the front spring to the hanger (as in the first type of known arrangement mentioned above) is generally avoided, either because there is insufficient space for the shackle or to avoid any risk of interference. Hitherto, the second type of known arrangement mentioned above, with a rear end of the spring guided to move over a cam surface, has been employed. One disadvantage of this is the tendency for noise during use. In some known arrangements of this type the rear end of the front spring is mounted at a higher level than the front end of the rear spring, or vice versa, to allow for greater spring length yet avoid interference. This adds to the complexity of the overall suspension assembly.

### SUMMARY OF THE INVENTION

The present invention provides a suspension system for supporting a frame member on one side of a vehicle chassis on the adjacent end of an axle, comprising first and second frame hangers for fixedly mounting to the frame member, a for-and aft extending leaf spring having a front end and a rear end, the front end being connected to the first frame hanger and the rear end being connected to the second frame hanger, both the front end and the rear end being formed into spring eyes and each having a pivot axis that is offset above a natural axis in bending of the leaf spring, and both the front end and the rear end being mounted so as to pivot freely about their respective pivot axes when the leaf spring is deflected, characterised in that the leaf spring has an underside of shallow concave shape when unloaded, at rest, and of more substantial concave shape when loaded and when fully deflected.

When a leaf spring used in a vehicle suspension is deflected in use between its unladen and maximally loaded configuration, not only does the length of the spring (straight line length, tip to tip /end to end) change, but the end regions of the spring pivot because of the change in spring curvature.

In the present invention each end of the leaf spring is rolled upwards to form a spring eye. These spring eyes provide for direct mounting of each end of the spring to the respective frame hanger, without any intervening pivotably mounted shackle, hitherto used at the rear end. Thus the positions of both the front and rear ends of the spring are fixed except for a small amount of rotation allowed for by the mounting of the spring eyes and optionally a small amount of displacement as may be allowed for by the mounting of the spring eyes.

The mounting of the spring eyes by means of bushes located within the eyes, as is conventional, also provides an axis of rotation at the centre of each bush which coincides with the pivot axis for the respective end region of the spring. As noted, these pivot axes are offset above the natural axis of bending of the spring. As the spring flexes these eyes rotate about their respective pivot axes.

By choice of the curvature of the leaf spring to be downwardly concave (i.e. concave on its under surface as mounted in use) and by appropriate offset between the pivot axes and the natural axis of bending of the spring, the pivoting of the end regions about the respective pivot axes, within a given range, enables effective operation of the spring. In other words, despite the ends of the spring being mounted so as to allow only minimal change in distance between the pivot axes at the front and rear ends of the spring when the spring is deflected, there is a sufficient range of vertical displacement at the centre of the spring for required functioning of the suspension. The arrangement may be loosely termed a "fixed length" leaf spring arrangement because the length of the leaf spring as a straight line between the respective spring eye centres remains substantially constant.

### BRIEF DESCRIPTION OF THE DRAWINGS

The invention will be described further, by way of example, with reference to the accompanying drawings, in which:
Figure 1 is a fragmentary perspective view of a version of the suspension system of the present invention, shown here in the at rest, unladen condition of the suspension;
Figure 2 shows the same suspension system as in figure 1 with the leaf spring deflected into a loaded condition;
Figure 3 is a side view, in isolation, of the leaf spring and its mounting bushes as shown in the suspension system of figure 1, shown here in the at rest, unladen condition of the suspension;
Figure 4 shows the same leaf spring as figure 3 once deflected into a loaded condition; and
Figure 5 is a side view, similar to figure 3 showing a modified embodiment of a leaf spring, namely a twin leaf version, as may be used in the suspension system of the present invention, shown here in the at rest, unladen condition of the suspension.

### DETAILED DESCRIPTION

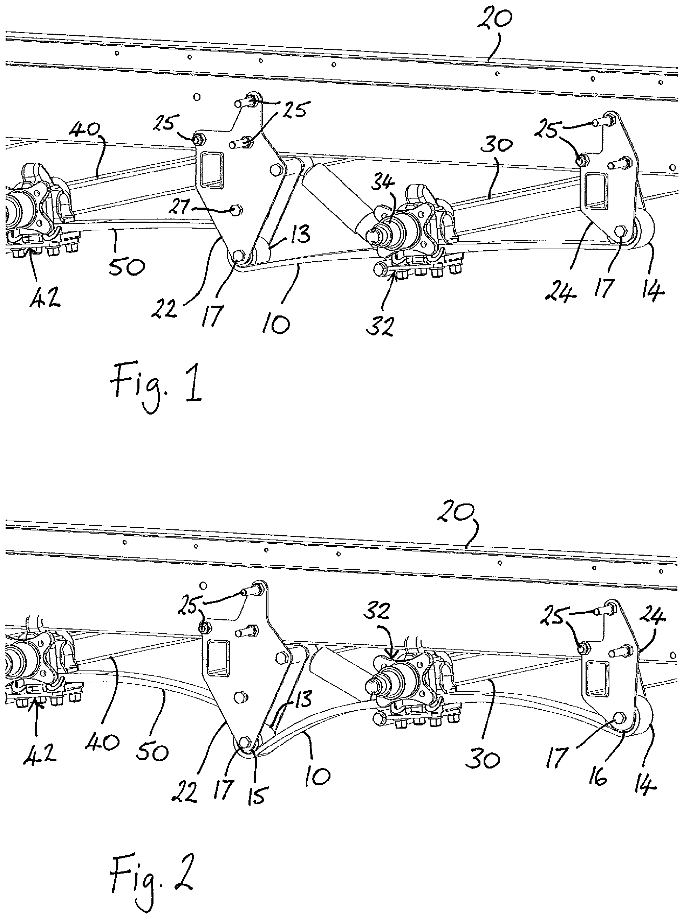

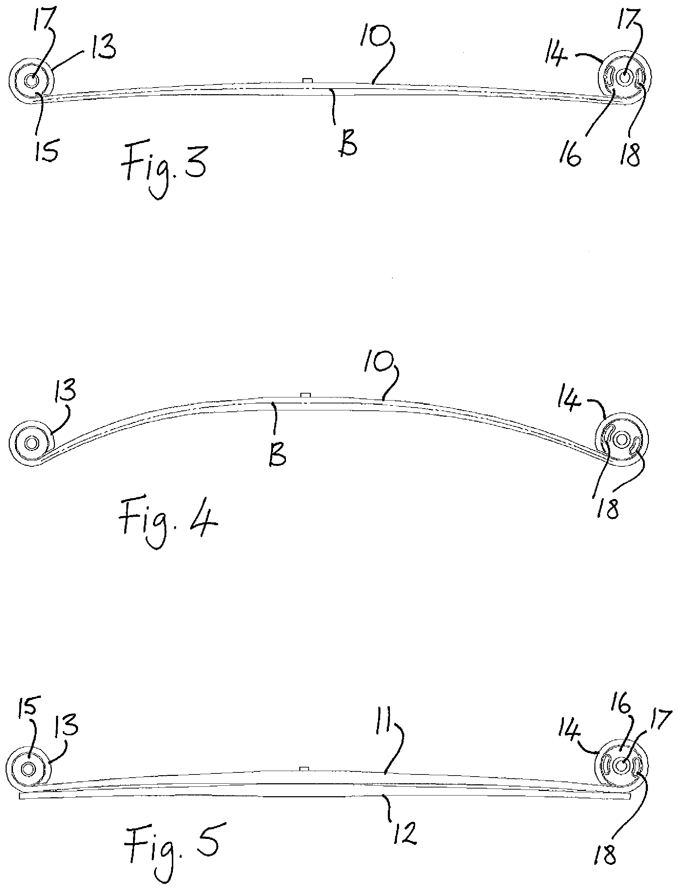

Referring to figures 1 and 2, these shown an exemplary suspension arrangement in accordance with the invention at one side of a vehicle, it being understood that this would in practice be duplicated at the other side of the vehicle. A curved leaf spring 10, which is downwardly concave, is suspended below a longitudinal frame member 20 of the vehicle chassis by means of first and second frame hangers 22, 24, in the form of brackets which are fixedly (rigidly) mounted to the frame member 20 by bolts 25. At each end the spring 10 is rolled upwards to form a spring eye. The spring eye 13 at the front end in the direction of vehicle travel is mounted, i.e. directly pivotably mounted, to the first hanger 22 and the spring eye 14 at the rear end of the spring 10 is mounted, i.e. directly pivotably mounted, to the second hanger 24. As best shown in figures 3 and 4, each eye 13, 14 is formed around a resilient, substantially cylindrical bush 15, 16. These bushes 15, 16 are typically of rubber, but could be formed of any other elastomeric material or any combination of such materials, and may be formed from two or more concentric sleeves of such material. The bushes 15, 16 are typically press fitted into the spring eyes 13, 14 and held by friction so there is virtually no relative rotation. A bolt 17 or similar through the centre of each bush 15, 16 mounts each bush to the lower end of its respective hanger 22, 24 and also defines a pivot axis for the respective end of the spring. As previously explained, each end of the spring 10 tends to pivot, i.e. change its orientation, as the spring flexes in use. This pivoting action is provided by twisting of the rubber about the bush centre which is mounted to the bolt 17.

In figure 3 it is apparent that the bush 16 at the rear end of the spring 10 is formed with opposing voids or apertures 18. The function of these voids 18 is to allow a small amount of displacement of the rear end of the spring relative to the front end (measured along a straight line eye to eye) as the spring is deflected. This is achieved solely by the deformability of the material of the bushes 15, 16 as enhanced by the voids 18 in the bush 16, as the spring ends pivot upon flexure of the spring 10.

An axle 30 of the vehicle is mounted to extend between mid-positions of respective springs 10 at the opposing sides of the vehicle. An axle mounting assembly 32 is shown in figures 1 and 2, including the wheel mounting hub 34. By means of the assembly 32, details of which are not described here as they are conventional and not relevant to the present invention, the centre of the spring 10 is attached below the axle 30. In use, as the vehicle is loaded, the frame member 20 transmits the weight to the ends of the spring 10, through the hangers 22, 24 and the bolts 17. This forces the ends of the spring 10 downwards relative to the centre of the spring, i.e. causes the spring to deflect to a condition illustrated in figure 2. This change in shape of the spring is illustrated in figures 3 and 4, which also indicate in broken lines at B the natural axis in bending of the spring. It will be noted that the spring configuration, with eyes formed at the ends by rolling upwards means that the pivot axes (at 17) for the ends of the spring are offset above the natural axis in bending B of the spring. This is a requirement for the operation of this suspension system.

As the spring 10 is loaded and flexes, the spring eyes 13, 14, the bushes 15, 16 on which they are fitted and the attachment pivots 17 rotate in opposite directions away from each other relative to the leaf part of the spring, and this rotation is allowed for by deformation of the material of the bushes 15, 16. In this respect the grade of rubber or other elastomeric material of which the bushes are made is chosen to allow for required deformation. Also one or both of the bushes 15, 16 can be constructed with concentric layers or sleeves of different compressibility to achieve the desired properties. This rotation of the spring eyes away from each other in isolation increases the length of the spring. With the spring leaf part shortening in isolation at the same time due to the increase in concave curvature the net result is the cancelling out of these two length changes. Therefore the overall change in length between the spring eyes is minimised. The change in length of the spring (as measured eye to eye in a straight line) is also minimised by the choice of the initial curvature of the spring, which is not flat, but at rest has slight downward facing curvature, which then increases on loading. This gives the ideal angular rotation at the spring eyes to give the best cancelling effect. With this shape, which is different to that used in known vehicle spring suspensions, a vertical deflection at the centre of the spring of up to about 50-60mm is the maximum likely to be encountered. With choice of geometry as in the present invention, and appropriate, yet conventional spring materials, this amount of vertical deflection results in only about +/-2mm change in length of the spring 10. This is also allowed for by the deformation of the bush material at both ends of the spring. Additionally, the provision of the voids 18 in the rear bush 16, allows additional compression of the bush at that end and therefore movement of the pivot 17 in the for-aft direction to make up the required amount. It is preferred that voids 18 are provide only in the rear bush to avoid any possibility of adverse steering effect. However it may be possible in other embodiments to provide both bushes without any voids, or to provide both bushes with voids, depending on the requirements of the suspension for any given vehicle.

In figures 1 and 2, the exemplary suspension is shown as part of a tandem axle arrangement as that will be its typical practical application. Thus, a further vehicle axle 40 and axle mounting arrangement 42 are shown, in part, at a location in front of the above described arrangement for which the reference numerals are provided. A further leaf spring 50 is used to mount this further forwardly positioned axle 40. This spring 50 is the same as the spring 10 except that at its rear end it is mounted to the hanger 22 by a bolt 27 at a location above the bolt 17 at the front end of the spring 10. For clarity, further reference numerals have not been added in respect of spring 50, but it is the same in principle as spring 10 and functions in exactly the same manner at just described.

The invention is not restricted to the details of the foregoing embodiments, and variations are possible within the scope of the claims. Variation in the bushes at each end of each of the springs is possible as already noted. It is also possible to provide additional assisting springs attached below the main spring. For purpose of clear illustration, figures 1 to 4 only show a single spring, but at least one secondary spring 12, extending below a primary spring 11 would probably be preferred in a practical embodiment, and such a version is shown in figure 5. While one additional spring 12 is shown in figure 5, two or more such additional springs may be provided, and the additional spring or springs may or may not extend at their ends to provide addition spring eye layers.

## Claims

1. A suspension system for supporting a frame member on one side of a vehicle chassis on the adjacent end of an axle, comprising first and second frame hangers for fixedly mounting to the frame member, a for-and aft extending leaf spring having a front end and a rear end, the front end being connected to the first frame hanger and the rear end being connected to the second frame hanger, both the front end and the rear end being formed into spring eyes and each having a pivot axis that is offset above a natural axis in bending of the leaf spring, and both the front end and the rear end being mounted so as to pivot freely about their respective pivot axes when the leaf spring is deflected such that the leaf spring has an underside of shallow concave shape when unloaded, at rest, and of more substantial concave shape when loaded and when fully deflected.

2. A suspension system according to claim 1, wherein both of the spring eyes, at the front and rear ends of the leaf spring, are mounted to resilient bushes, said bushes being mounted to the first and second hangers and providing the respective pivot axes of the ends of the leaf spring.

3. A suspension system according to claim 2, wherein at least one of the resilient bushes has internal voids to allow longitudinal displacement of the respective end of the leaf spring when the leaf spring is compressed.

4. A suspension system according to any preceding claim, wherein a second leaf spring is attached to the said leaf spring, said second leaf spring extending on the underside of the first leaf spring to increase the working load of the suspension.

5. A suspension system for supporting a frame member on one side of a vehicle chassis on the adjacent end of an axle substantially as hereinbefore described with reference to and as illustrated by the accompanying drawings.

6. A vehicle incorporating a suspension system according to any preceding claim.
